# EUROPEAN PATENT APPLICATION

(11) **EP 4 730 466 A1**
(43) Date of publication of application: **22.04.2026**
(21) Application number: 25745259.9
(22) Date of filing: 24.01.2025
(51) Int. Cl.: H01M 10/0567, H01M 10/42, H01M 10/052, H01M 4/38

(54) **ELECTROLYTE FOR LITHIUM-SULFUR BATTERY, AND LITHIUM-SULFUR BATTERY INCLUDING SAME**

(30) Priority: 26.01.2024 KR 20240012696
(71) Applicant: LG Energy Solution, Ltd., Seoul 07335 (KR)
(72) Inventor: KIM, Il-To, Daejeon 34122 (KR); LEE, Chang-Hoon, Daejeon 34122 (KR); PARK, Seong-Hyo, Daejeon 34122 (KR)
(74) Representative: Goddar, Heinz J.
(86) International application number: PCT/KR2025/001529
(87) International publication number: WO 2025/159593

(57) **Abstract**

The present disclosure relates to an electrolyte solution for a lithium-sulfur battery and a lithium-sulfur battery including the same, and the electrolyte solution for the lithium-sulfur battery includes a non-aqueous solvent, a lithium salt, a nitrate and an aryl derivative, wherein the non-aqueous solvent includes a heterocyclic compound including a single oxygen atom (O) or a single sulfur atom (S) in a ring structure; and a glycol ether, and the aryl derivative includes a selenium-based aryl derivative and a tellurium-based aryl derivative together.

## Description

### TECHNICAL FIELD

The present disclosure relates to an electrolyte solution for a lithium-sulfur battery and a lithium-sulfur battery including the same.

This application is based on and claims priority from Korean Patent Application No. 2024-0012696 filed on January 26, 2024 with the Korean Intellectual Property Office, the disclosure of which is incorporated herein in its entirety by reference.

### BACKGROUND

A lithium-sulfur battery refers to a battery system using a sulfur-based material having a sulfur-sulfur (S-S) bond as a positive electrode active material, and a lithium metal as a negative electrode active material. Sulfur, the main component of the positive electrode active material is abundant and readily available all over the world, and has low toxicity and low atomic weight.

As secondary batteries are used in a wide range of applications including electric vehicles (EV) and energy storage systems (ESS), attention is directed to lithium-sulfur battery technology that theoretically achieves high energy storage density per weight (~2,600 Wh/kg) compared to lithium-ion secondary batteries having lower energy storage density per weight (~250 Wh/kg).

Inside lithium-sulfur batteries, during discharging, oxidation occurs where the negative electrode active material, lithium loses electrons to form lithium cations, and reduction occurs where the positive electrode active material, the sulfur-based material gains the electrons. Here, through the reduction reaction of the sulfur-based material, the S-S bond gains two electrons and are converted to sulfur anions. The lithium cations produced by the oxidation reaction of the lithium migrate to the positive electrode through an electrolyte, and bond with the sulfur anions produced by the reduction reaction of the sulfur-based compound to form a salt. Specifically, the sulfur before the discharge has a cyclic S₈ structure, and it is converted to lithium polysulfide (LiSx) by the reduction reaction and is completely reduced to lithium sulfide (Li₂S).

In this instance, due to the low electrical conductivity feature, the sulfur in the sulfur-based compound (which is the positive electrode active material), is relatively unreactive to the electrons and the lithium ions in a solid state. To improve the reactivity of the sulfur in the lithium-sulfur batteries, technology has been developed to produce intermediate polysulfide, Li₂Sₓ, to facilitate liquid phase reaction and improve the reactivity. According to this technology, electrolyte solutions include ether-based solvents having high solubility with respect to lithium polysulfide, for example, dioxolane or dimethoxy ethane (DME). Accordingly, the amount of the electrolyte solution affects the reactivity of sulfur and battery lifespan.

In addition, during discharging of the lithium-sulfur batteries, polysulfide (PS) produced from the positive electrode dissolves and reacts with the electrolyte solution, leading to side reaction, causing battery degradation. To achieve high-energy density cells, it is important to reduce the amount of electrolyte, but when the amount of electrolyte is smaller, the concentration of polysulfide is higher, resulting in faster side reaction and shorter battery life. Therefore, there is a need for development of technology for achieving high energy density with a certain amount of electrolyte.

### DISCLOSURE

### Technical Problem

The present disclosure is designed to solve the above-described problems, and
according to an aspect, the present disclosure is directed to providing a lithium-sulfur battery with improved discharge capacity.

To this end, the present disclosure is directed to providing an electrolyte solution for a lithium-sulfur battery for changing the reaction pathway of sulfur (S) to control the elution characteristics of polysulfide in order to solve the problem with resistance characteristics caused by the elution of polysulfide (PS).

Accordingly, the present disclosure is directed to providing a lithium-sulfur battery having high energy density and long life characteristics with the optimal amount of electrolyte.

### Technical Solution

To solve the above-described problems,
according to an aspect of the present disclosure, there is provided an electrolyte solution for a lithium-sulfur battery of the following embodiments.

The electrolyte solution for the lithium-sulfur battery according to a first embodiment includes:
a non-aqueous solvent, a lithium salt, a nitrate, a first aryl derivative and a second aryl derivative, wherein the non-aqueous solvent includes a heterocyclic compound including a single oxygen atom (O) or a single sulfur atom (S) in a ring structure; and a glycol ether, wherein the first aryl derivative includes at least one of compounds represented by any one of the following Chemical Formulas 1 to 4, and wherein the second aryl derivative includes at least one of compounds represented by any one of the following Chemical Formulas 5 to 8:

   [Chemical Formula 1] R¹-Se-Li

   [Chemical Formula 2] R²-Se-Se-R³

   [Chemical Formula 3] R⁴-Se-Sx-Li

   [Chemical Formula 4] R⁵-Se-Sx-Se-R⁶

   [Chemical Formula 5] R⁷-Te-Li

   [Chemical Formula 6] R⁸-Te-Te-R⁹

   [Chemical Formula 7] R¹⁰-Te-Sx-Li

   [Chemical Formula 8] R¹¹-Te-Sx-Te-R¹²
in the above Chemical Formulas 1 to 8,
R¹~R¹² are each independently an C₆-C₂₀ aryl group, and
x is a number of 1 to 8.

According to a second embodiment, in the first embodiment,
the first aryl derivative may include diphenyl diselenide (PDSe).

According to a third embodiment, in the first or second embodiment,
the second aryl derivative may include diphenyl ditelluride (DPDTe).

According to a fourth embodiment, in any one of the first to third embodiments,
a weight ratio of the first aryl derivative and the second aryl derivative may range from 3:2 to 2:3.

According to a fifth embodiment, in any one of the first to fourth embodiments,
a weight ratio of the first aryl derivative and the second aryl derivative may be 1:1.

According to a sixth embodiment, in any one of the first to fifth embodiments,
a sum of weights of the first aryl derivative and the second aryl derivative may be equal to or less than a weight of the nitrate.

According to a seventh embodiment, in any one of the first to sixth embodiments,
a sum of weights of the first aryl derivative and the second aryl derivative may be 3 wt% or more of a total weight of the electrolyte solution.

According to an eighth embodiment, in any one of the first to seventh embodiments,
a volume ratio of the heterocyclic compound and the glycol ether may range from 1:3 to 1:10.

According to another aspect of the present disclosure, there is provided a lithium-sulfur battery of the following embodiments.

The lithium-sulfur battery according to a ninth embodiment includes:
the electrolyte solution for the lithium-sulfur battery according to any one of the first to eighth embodiments; a positive electrode including a positive electrode active material; and a negative electrode including a negative electrode active material, wherein the positive electrode active material includes an elemental sulfur, a sulfur compound or a mixture thereof.

According to a tenth embodiment, in the ninth embodiment,
a specific capacity may be in a range of 1,400 mAh/gs or more at 0.1C discharge.

### Advantageous Effects

The electrolyte solution for the lithium-sulfur battery according to an embodiment of the present disclosure has the effect of changing the discharge mechanism of the lithium-sulfur battery by changing the reduction reaction pathway of lithium sulfide.

Accordingly, the lithium-sulfur battery using the same may have higher capacity, and thus it may be possible to increase the discharge capacity of the lithium-sulfur battery and achieve high energy density.

### BRIEF DESCRIPTION OF THE DRAWING

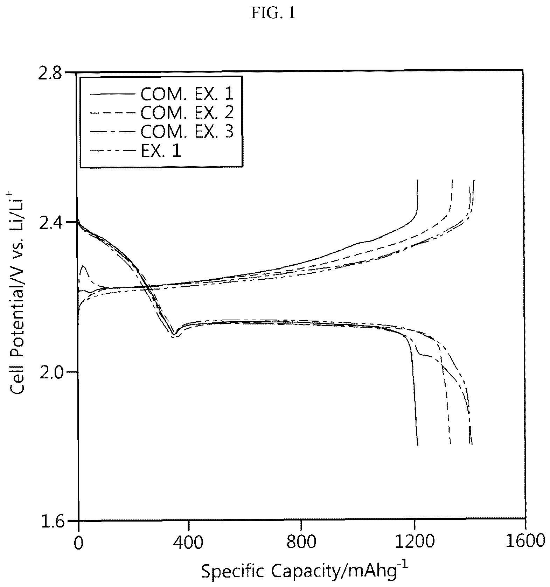

FIG. 1 is a graph showing the evaluation results of charge/discharge characteristics of lithium-sulfur batteries using Example 1 and Comparative Examples 1 to 3 in this specification.

### BEST MODE

Hereinafter, the present disclosure will be described in detail. However, the present disclosure is not limited to the following description, and if necessary, each component may be modified in various ways or selectively used in combination. Accordingly, it should be understood that the present disclosure incorporates all modifications, equivalents or substitutes included in the technical scope of the present disclosure.

The terms "comprising", "including" and "having" when used in this specification, specify the presence of stated elements, but do not preclude the presence or addition of one or more other elements unless expressly stated otherwise.

The term "(poly)sulfide (PS)" as used herein is the concept that covers "(poly)sulfide ion (Sₓ²⁻, 1≤x≤8))" and "lithium (poly)sulfide (Li₂Sₓ or LiSₓ⁻, 1≤x≤8)".

The term "lithium sulfide" as used herein refers to a material of Li₂S.

An electrolyte solution for a lithium-sulfur battery according to an aspect of the present disclosure includes:
a non-aqueous solvent, a lithium salt, a nitrate, a first aryl derivative and a second aryl derivative, wherein the non-aqueous solvent includes a heterocyclic compound including a single oxygen atom (O) or a single sulfur atom (S) in a ring structure; and a glycol ether, wherein the first aryl derivative includes at least one of compounds represented by any one of Chemical Formulas 1 to 4 below, and wherein the second aryl derivative includes at least one of compounds represented by any one of Chemical Formulas 5 to 8 below.

   [Chemical Formula 1] R¹-Se-Li

   [Chemical Formula 2] R²-Se-Se-R³

   [Chemical Formula 3] R⁴-Se-Sx-Li

   [Chemical Formula 4] R⁵-Se-Sx-Se-R⁶

   [Chemical Formula 5] R⁷-Te-Li

   [Chemical Formula 6] R⁸-Te-Te-R⁹

   [Chemical Formula 7] R¹⁰-Te-Sx-Li

   [Chemical Formula 8] R¹¹-Te-Sx-Te-R¹²
In the above Chemical Formulas 1 to 8,
R¹~R¹² are each independently a C₆-C₂₀ aryl group, and
x is a number of 1 to 8.

In an embodiment of the present disclosure, the non-aqueous solvent is included as a medium in the electrolyte solution for the lithium-sulfur battery. The lithium salt is included as an electrolyte salt in the electrolyte solution for the lithium-sulfur battery. The nitrate is included as an additive to form a stable film on a negative electrode made of, for example, lithium metal and improve charge/discharge efficiency. In addition, the aryl derivative is included as an additive to change the reduction reaction pathway of lithium sulfide and provide additional discharge capacity.

In the present disclosure, when the aryl derivative is included in the electrolyte solution for the lithium-sulfur battery, the aryl derivative may act as a chain extender for lithium sulfide (Li₂S) in the positive electrode or the electrolyte solution, thereby changing the reduction reaction pathway of lithium sulfide.

According to the present disclosure, when the aryl derivative includes the first aryl derivative including at least one of compounds represented by any one of Chemical Formulas 1 to 4 and the second aryl derivative including at least one of compounds represented by any one of Chemical Formulas 5 to 8, it may be possible to provide a synergistic effect of improved discharge capacity of the lithium-sulfur battery and high nominal voltage.

Specifically, when the aryl derivative includes the compound represented by Chemical Formula 1 or Chemical Formula 5, in the electrolyte solution for the lithium-sulfur battery including the same, chain extension may act on lithium sulfide in the form of -Se-R¹ or -Te-R⁷.

In addition, when the aryl derivative includes the compound represented by Chemical Formula 2 or Chemical Formula 6, Se-Se bond or Te-Te bond may be debonded, and accordingly, in the electrolyte solution for the lithium-sulfur battery including the same, chain extension may act on lithium sulfide in the form of -Se-R² , -Se-R³, -Te-R⁸ , or -Te-R⁹.

In addition, when the aryl derivative includes the compound represented by Chemical Formula 3 or Chemical Formula 7, in the electrolyte solution for the lithium-sulfur battery including the same, chain extension may act on lithium sulfide in the form of -Sx-Se-R⁴ or -Sx-Te-R¹⁰.

In addition, when the aryl derivative includes the compound represented by Chemical Formula 4 or Chemical Formula 8, chain extension may act on lithium sulfide in the form of -Sx-Se-R⁵, -Sx-Se-R⁶, -Sx-Te-R¹¹, or -Sx-Te-R¹².

In an embodiment of the present disclosure, the electrolyte solution for the lithium-sulfur battery may include diphenyl diselenide (PDSe) as the first aryl derivative.

In an embodiment of the present disclosure, the electrolyte solution for the lithium-sulfur battery may include diphenyl ditelluride (DPDTe) as the second aryl derivative.

According to an embodiment of the present disclosure, when the electrolyte solution for the lithium-sulfur battery uses the first aryl derivative and the second aryl derivative together rather than the first aryl derivative or the second aryl derivative alone, this may have a beneficial effect on improving the performance of the battery.

In particular, in an embodiment of the present disclosure, a weight ratio of the first aryl derivative and the second aryl derivative may range from 3:2 to 2:3, from 2:1 to 1:2, from 2:1 to 1:1, from 1:1 to 1:2, and specifically 1:1. Accordingly, the use of the first aryl derivative and the second aryl derivative may magnify the synergistic effect.

In the present disclosure, the electrolyte solution for the lithium-sulfur battery includes the nitrate. Specifically, the nitrate refers collectively to nitric acid-based compounds or nitrous acid-based compounds that may be used as an additive in the electrolyte solution for the lithium-sulfur battery. The nitric acid- or nitrous acid-based compound may contribute to the formation of a stable film on the negative electrode made of, for example, lithium metal and improved charge/discharge efficiency, but the mechanism of the present disclosure is not limited thereto.

In an embodiment of the present disclosure, the nitrate may include, for example, inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂) or ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite or octyl nitrite; organic nitro compounds such as nitromethane, nitropropane, nitrobutane, nitrobenzene, dinitrobenzene, nitropyridine, dinitropyridine, nitrotoluene or dinitrotoluene, or a mixture thereof, but is not limited thereto.

In an embodiment of the present disclosure, the cation of the nitrate may be selected from alkali metals, for example, lithium, sodium, potassium, rubidium and cesium, but is not limited thereto.

In another embodiment of the present disclosure, the nitrate may include lithium nitrate (LiNO₃).

In an embodiment of the present disclosure, the sum of weights of the nitrate and the aryl derivative may be 4 wt% or more of the total weight of the electrolyte solution for the lithium-sulfur battery. Specifically, the sum of weights of the nitrate and the aryl derivative may be 5 wt% or more and 10 wt% or less, 5 wt% or more and 9 wt% or less, or 5 wt% or more and 7 wt% or less of the total weight of the electrolyte solution for the lithium-sulfur battery. When the sum of weights of the nitrate and the aryl derivative falls within the aforementioned range, this may have a beneficial effect on increasing discharge capacity and improving life characteristics during operation of the lithium-sulfur battery using the same, but the present disclosure is not limited thereto.

In another embodiment of the present disclosure, the weight of the aryl derivative may be equal to or less than the weight of the nitrate. Specifically, the weight of the aryl derivative may be less than the weight of the nitrate. When the weight ratio of the nitrate and the aryl derivative falls within the aforementioned range, this may have a beneficial effect on increasing discharge capacity and improving life characteristics during operation of the lithium-sulfur battery using the same, but the present disclosure is not limited thereto.

In still another embodiment of the present disclosure, the sum of total weights of the nitrate and the aryl derivative may be 4 wt% or more of the total weight of the electrolyte solution for the lithium-sulfur battery, the total weight of the aryl derivative may be equal to or less than the weight of the nitrate, and a total molar ratio of the aryl derivative to the nitrate may be 0.5:1 or less.

According to the present disclosure, the non-aqueous solvent includes a combination of the heterocyclic compound and the glycol ether.

The glycol ether is an acyclic ether including two oxygen atoms, and is not limited to a particular one and may include any glycol ether used as the electrolyte solution of the lithium-sulfur battery.

In an embodiment of the present disclosure, the glycol ether may be represented by Chemical Formula below:

R¹³-O-(CH₂CH₂O)ₓ-R¹⁴

(In the above Chemical Formula,
R¹³ and R¹⁴ are the same or different, and each of them is independently a substituted or unsubstituted C₁-C₆ alkyl group, a substituted or unsubstituted C₆-C₁₂ aryl group, or a substituted or unsubstituted C₇-C₁₃ arylalkyl group, and x is an integer of 0 to 4.)

The glycol ether may include, for example, dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, or two or more of them, but is not limited thereto.

According to an embodiment of the present disclosure, the non-aqueous solvent may include dimethoxy ethane as the glycol ether.

The heterocyclic compound is an ether including a single oxygen atom (O) or a single sulfur atom (S) in the ring structure and thus including a single -C-O-C- structure or a single -C-S-C- structure in the ring structure, and is not limited to a particular one and may include any heterocyclic compound used as the electrolyte solution of the lithium-sulfur battery.

In an embodiment of the present disclosure, because the heterocyclic compound includes two or more double bonds, and at the same time, any one of the oxygen atom and the sulfur atom, a solid electrolyte interface (SEI) layer may be formed on the negative electrode (lithium-based metal) surface by the ring opening reaction of the heterocyclic compound in the initial discharging stage of the battery, thereby suppressing the formation of lithium dendrites. Further, it may be possible to suppress electrolyte decomposition on the lithium-based metal surface and its consequential side reaction, thereby improving the life characteristics of the lithium-sulfur battery. In addition, because the delocalization of lone pair electrons on the heteroatom (oxygen atom or sulfur atom) impedes salt dissolution, it may be possible to suppress the elution of polysulfide into the electrolyte solution, but the present disclosure is not limited thereto.

In an embodiment of the present disclosure, the heterocyclic compound includes two or more double bonds to form the SEI layer on the negative electrode (lithium-based metal) surface, and also includes the heteroatom (oxygen atom or sulfur atom) to make it polar so as to increase the affinity with the other solvent in the electrolyte solution.

In an embodiment of the present disclosure, the heterocyclic compound may include heterocyclic compounds having 4- to 15-membered rings, specifically 4- to 7-membered rings, and more specifically 5- to 6-membered rings. In addition, the heterocyclic compound may include a heterocyclic compound which is unsubstituted, or substituted with at least one substituent selected from the group consisting of a C₁-C₄ alkyl group, a C₃-C₈ cyclic alkyl group, a C₆-C₁₀ aryl group, a halogen group, a nitro group (-NO₂), an amine group (-NH₂) and a sulfonyl group (-SO₂). In an embodiment of the present disclosure, the substituted heterocyclic compound may be advantageous in terms of stabilizing the radicals and suppressing side reaction with the electrolyte solution, but the present disclosure is not limited thereto.

The heterocyclic compound may include, for example, furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene or two or more of them, but is not limited thereto.

In an embodiment of the present disclosure, the non-aqueous solvent may include 2-methylfuran as the heterocyclic compound.

In an embodiment of the present disclosure, the volume of the glycol ether may be, for example, in a range of 60 vol% or more, for example, 65 vol% or more, 70 vol% or more, 75 vol% or more, 80 vol% or more, or 85 vol% or less based on the total volume of the non-aqueous solvent. When the volume of the glycol ether falls within the aforementioned range, there may be an effect of providing the optimal solubility with respect to the lithium salt, the nitrate, the aryl derivative and the lithium polysulfide eluted from the positive electrode during operation of the battery, but the present disclosure is not limited thereto.

In an embodiment of the present disclosure, on the basis of the total volume of the non-aqueous solvent, the heterocyclic compound may, for example, occupy the volume other than the glycol ether. For example, the volume of the heterocyclic compound may be, for example, in a range of 15 vol% or more, for example, 20 vol% or more, 40 vol% or less, 35 vol% or less, 30 vol% or less, or 25 vol% or less based on the total volume of the non-aqueous solvent, but is not limited thereto. When the volume of the heterocyclic compound falls within the aforementioned range, there may be an effect of providing the optimal solubility with respect to the lithium salt, the nitrate, the aryl derivative and the lithium polysulfide eluted from the positive electrode during operation of the battery, but the present disclosure is not limited thereto.

In another embodiment of the present disclosure, a ratio of the total volume of the glycol ether to the total volume of the heterocyclic compound may be 3:1 or more. Specifically, the ratio of the total volume of the glycol ether to the total volume of the heterocyclic compound may range from 3:1 to 5:1, from 3:1 to 4:1, or from 3.5:1 to 4:1. When the volume ratio of the glycol ether to the heterocyclic compound falls within the aforementioned range, this may have a beneficial effect on improving the operational stability of the battery, but the present disclosure is not limited thereto.

In an embodiment of the present disclosure, in addition to the heterocyclic compound and the glycol ether, the non-aqueous solvent may further include an acyclic ether including a single oxygen atom. When the non-aqueous solvent further includes the acyclic ether, this may have a beneficial effect on preventing overvoltage at SOC70 during operation of the battery, but the present disclosure is not limited thereto.

In an embodiment of the present disclosure, the acyclic ether including a single oxygen atom may be represented by Chemical Formula below.

R¹⁵-O-R¹⁶

In the above Chemical Formula, R¹⁵ and R¹⁶ are each independently a substituted or unsubstituted C₁-C₂₀ alkyl group.

In an embodiment of the present disclosure, in the 'substituted' C₁-C₂₀ alkyl group, the substituent may include, for example, a halogen atom, a hydroxyl group, a nitro group, a cyano group, an amino group, an amidino group, an acetamino group, a hydrazine, a hydrazone, a carboxyl group, a sulfonyl group, a sulfamoyl group, a sulfonic acid group, a phosphoric acid, a C₁-C₅ alkyl group, a C₁-C₅ alkoxy group, a C₂-C₅ alkenyl group, a C₂-C₅ alkynyl group, a C₄-C₁₀ cycloalkyl group, a C₆-C₁₀ aryl group, a C₆-C₁₀ heteroaryl group, a C₆-C₂₀ arylalkyl group, a C₆-C₂₀ heteroarylalkyl group, or a combination thereof.

In another embodiment of the present disclosure, to suppress side reaction with polysulfide or lithium during operation of the battery, R¹⁵ and R¹⁶ may be each independently, for example, an unsubstituted C₁-C₂₀ alkyl group.

In still another embodiment of the present disclosure, R¹⁵ and R¹⁶ may each independently include, for example, a methyl group, an ethyl group, an n-propyl group, an n-butyl group, an n-amyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosanyl group, an iso-propyl group, a sec-butyl group, an iso-butyl group, a tert-butyl group, a 1-methylbutyl group, a 1-ethylpropyl group, a 2-methylbutyl group, an iso-amyl group, a neopentyl group, a 1,2-dimethylpropyl group, a 1,1-dimethylpropyl group, a tert-amyl group, a 1,3-dimethylbutyl group, a 3,3-dimethylbutyl group, a 2-ethylbutyl group, a 2-ethyl-2-methylpropyl group, a straight-chain or branched heptyl group, a 1-methylheptyl group, a 2-ethylhexyl group, a 1,5-dimethylhexyl group, a tert-octyl group, a branched nonyl group, a branched decyl group, a branched undecyl group, a branched dodecyl group, a branched tridecyl group, a branched tetradecyl group, a branched pentadecyl group, a branched hexadecyl group, a branched heptadecyl group, a branched octadecyl group, a straight-chain or branched nonadecyl group, a straight-chain or branched eicosanyl group, a cyclopropyl group, a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexylpropyl group, a cyclododecyl group, a norbornyl group, a bornyl group, a cyclopentylethyl group or a bicyclooctyl group.

In another embodiment of the present disclosure, preferably, R⁹ may be, for example, an unsubstituted alkyl group to suppress side reaction with polysulfide or lithium during operation of the battery, but the present disclosure is not limited thereto.

In an embodiment of the present disclosure, the acyclic ether may include, for example, bis(2,2,2-trifluoroethyl)ether, methyl propyl ether, ethyl propyl ether, dipropyl ether, methyl t-butyl ether, methyl hexyl ether, ethyl t-butyl ether, ethyl hexyl ether, or two or more of them.

In an embodiment of the present disclosure, these types of acyclic ethers may act as a nonsolvent with respect to polysulfide eluted from the positive electrode, thereby suppressing the elution of polysulfide from the positive electrode.

In another embodiment of the present disclosure, the acyclic ether may be, for example, included in an amount of, 10 vol% or less of the total volume of the non-aqueous solvent, but is not limited thereto. Specifically, the acyclic ether may be included in an amount of 1 vol% or more and 10 vol% or less, or 5 vol% or more and 10 vol% or less of the total volume of the non-aqueous solvent. When the amount of the acyclic ether falls within the aforementioned range, this may have a beneficial effect on improving the operational stability of the battery, but the present disclosure is not limited thereto.

In another embodiment of the present disclosure, the acyclic ether may be included in an amount of 10 vol% or less of the total volume of the non-aqueous solvent, and a ratio of the total volume of the glycol ether to the total volume of the acyclic ether may be, for example, 6:1 or more, and for example, may range from 6:1 to 7.5:1 or from 6.5:1 to 7:1, but is not limited thereto.

In an embodiment of the present disclosure, when the amount of the solvent in the total volume of the non-aqueous solvent falls within the aforementioned range, this may have a beneficial effect on suppressing the elution of polysulfide and improving the operational stability of the battery, but the present disclosure is not limited thereto.

The lithium salt may include any type of lithium salt commonly used in the electrolyte solution of the lithium-sulfur battery without limitation. The lithium salt may include, for example, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, chloro borane lithium, lower aliphatic carboxylic acid lithium, lithium tetraphenyl borate, lithium imide or two or more of them, but is not limited thereto.

In an embodiment of the present disclosure, the lithium salt may not include a lithium salt of nitric acid. The lithium salt of nitric acid may be included as an example of the nitrate described above.

In an embodiment of the present disclosure, the lithium salt may include an inorganic lithium salt. The inorganic lithium salt does not include carbon (C) in the structure and may include, without limitation, any type of inorganic lithium salt commonly used in the electrolyte solution of the lithium-sulfur battery. For example, the inorganic lithium salt may include LiCl, LiBr, LiI, LiClO₄, LiBF₄, LiB₁₀Cl₁₀, LiPF₆, LiAsF₆, LiSbF₆, LiAlCl₄, (SO₂F)₂NLi, chloro borane lithium, lithium imide, or two or more of them, and specifically, may include (SO₂F)₂NLi (LiFSI), but the present disclosure is not limited thereto. When the lithium salt includes the inorganic lithium salt, its smaller structure and higher density in the electrolyte solution than organic lithium salts may be advantageous in terms of ionic conductivity and achieving a high electrolyte ratio (E/S) in the lithium-sulfur battery, but the present disclosure is not limited thereto.

In an embodiment of the present disclosure, the lithium salt may include lithium bis(fluorosulfonyl)imide (LiFSI).

In an embodiment of the present disclosure, when the lithium salt includes lithium bis(fluorosulfonyl)imide (LiFSI), it may be more advantageous in terms of performance of the lithium-sulfur battery such as discharge capacity than lithium bis(trifluoromethanesulfonyl)imide (LiTFSI), but the effect of the present disclosure is not limited thereto.

According to an embodiment of the present disclosure, in addition to the inorganic lithium salt, the lithium salt may further include an organic lithium salt commonly used in the art. The organic lithium salt is a lithium salt including carbon (C) in the structure and may include, without limitation, any type of organic lithium salt used in the lithium-sulfur battery. For example, the organic lithium salt may include LiCF₃SO₃, LiCF₃CO₂, LiC₄BO₈, CH₃SO₃Li, CF₃SO₃Li, (CF₃SO₂)₂NLi, (C₂F₅SO₂)₂NLi, (CF₃SO₂)₃CLi, lower aliphatic carboxylic acid lithium, lithium tetraphenyl borate, or two or more of them, but is not limited thereto.

In an embodiment of the present disclosure, the concentration of the lithium salt may be appropriately determined in view of ionic conductivity or solubility, and may range, for example, from 0.1 M to 4.0 M, from 0.3 M to 3.0 M, from 0.5 M to 2.0 M, from 0.5 M to 1.5 M, from 0.5 M to 1.0 M, or from 0.5 M to 0.75 M. When the concentration of the lithium salt falls within the aforementioned range, this may have a beneficial effect on ionic conductivity and viscosity of the electrolyte solution or the performance of the lithium-sulfur battery using the same, such as discharge capacity and/or nominal voltage, but is not limited thereto.

In another embodiment of the present disclosure, in addition to the above-described composition, the electrolyte solution for the lithium-sulfur battery may further include any other additive to improve charge/discharge characteristics or flame retardancy. In the present disclosure, the additive is not limited to a particular one and may include, for example, pyridine, triethylphosphite, triethanolamine, ethylenediamine, n-glyme, hexa phosphoric acid triamide, nitrobenzene derivatives, sulfur, quinone imine dyes, N-substituted oxazolidinone, N,N-substituted imidazolidine, ammonium salts, pyrrole, 2-methoxyethanol, aluminum trichloride, fluoroethylene carbonate (FEC), propene sultone (PRS) or vinylene carbonate (VC).

The electrolyte solution for the lithium-sulfur battery according to an aspect of the present disclosure may be prepared by a commonly used method known in the art, but the present disclosure is not limited to a particular method.

A lithium-sulfur battery according to another aspect of the present disclosure includes the electrolyte solution for the lithium-sulfur battery described above, and a positive electrode including a positive electrode active material and a negative electrode including a negative electrode active material. Specifically, the positive electrode active material includes elemental sulfur, a sulfur compound or a mixture thereof.

The positive electrode, the positive electrode active material, the negative electrode and the negative electrode active material are not limited to particular ones and may include those used in the lithium-sulfur battery without departing from the scope of the present disclosure.

For example, the positive electrode may include a positive electrode current collector and a positive electrode active material layer on one or two surfaces of the positive electrode current collector, and the negative electrode may include a negative electrode current collector and a negative electrode active material layer on one or two surfaces of the negative electrode current collector.

In this instance, the positive electrode current collector supports the positive electrode active material and is not limited to a particular one and may include any material having high conductivity without causing any chemical change in the corresponding battery, and the negative electrode current collector supports the negative electrode active material and is not limited to a particular one and may include any material having high conductivity without causing any chemical change in the corresponding battery.

In an embodiment of the present disclosure, the positive electrode active material includes elemental sulfur, a sulfur compound or a mixture thereof. Specifically, the positive electrode active material may include an inorganic sulfur (S₈), Li₂S, (n≥1), a disulfide compound, an organic sulfur compound, a carbon-sulfur polymer ((C₂Sₓ)ₙ, x=2.5 to 50, n≥2), or two or more of them.

In an embodiment of the present disclosure, the negative electrode active material is not limited to a particular one and may include any material capable of reversibly intercalating or deintercalating lithium (Li⁺), or any material that reacts with lithium ions to reversibly form lithium-containing compounds. For example, the negative electrode active material may include lithium metals, lithium alloys, or a mixture thereof. The lithium alloy may include, for example, alloys of lithium (Li) with metal such as sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), tin (Sn) or two or more of them.

In addition to the active material, each of the positive electrode active material layer and the negative electrode active material layer may further include a conductive material, a binder or an additive. Commonly used types of conductive materials, binders or additives may be used, and its detailed description is omitted.

In an embodiment of the present disclosure, the lithium-sulfur battery may be, for example, coin-like, cylindrical, pouch-like or prismatic in shape, and the shape of the battery is not limited to a particular one. In addition, the lithium-sulfur battery may be used in a battery cell used as a power source of a small device and a unit battery in a medium- to large-sized battery module including a plurality of battery cells, and is not limited to a particular application of use.

In an embodiment of the present disclosure, the lithium-sulfur battery using the positive electrode including the carbon composite may be superior in terms of initial capacity and cycling stability as well as energy density of the battery, but the effect of the present disclosure is not limited thereto.

In an embodiment of the present disclosure, the lithium-sulfur battery may ensure the optimal amount of electrolyte to increase energy density and prevent side reaction caused by polysulfide in the electrolyte solution.

In an embodiment of the present disclosure, the lithium-sulfur battery may have, for example, an electrolyte/sulfur (E/S) ratio of 2 g/g or more, wherein the E/S ratio indicates a weight ratio of the electrolyte solution to sulfur which is the positive electrode active material. Specifically, the electrolyte/sulfur (E/S) ratio may be 2.3 g/g or more. For example, the E/S ratio may range from 2 g/g to 3 g/g, from 2.1 g/g to 2.7 g/g, or from 2.3 g/g to 2.5 g/g. To prevent side reaction caused by the high concentration of polysulfide in the electrolyte solution when reducing the E/S ratio to increase the energy density, the present disclosure has an effect of increasing the energy density of the battery without affecting the E/S ratio. The E/S ratio of the lithium-sulfur battery may have a larger value than the aforementioned range, and it is obvious to those skilled in the art that the upper limit is not limited to a particular range, and the present disclosure is not limited thereto.

In another embodiment of the present disclosure, the lithium-sulfur battery may have the energy density ranging from 400 Wh/kg to 500 Wh/kg. Specifically, the lithium-sulfur battery may have the energy density of 430 Wh/kg or more, 450 Wh/kg or more, or 460 Wh/kg or more, but the present disclosure is not limited thereto.

In an embodiment of the present disclosure, the specific capacity of the lithium-sulfur battery may be 1,400 mAh/gs or more. Specifically, the specific capacity may be 1,400 mAh/gs or more at 0.1C discharge.

Hereinafter, the present disclosure will be described in more detail through examples. The following examples are provided to describe the present disclosure by way of illustration, and the scope of the present disclosure is not limited thereto.

A pouch cell-type lithium-sulfur battery was manufactured by the following method, and the performance of the manufactured battery was evaluated.

### [Manufacture of battery]

### Example 1

### Preparation of electrolyte solution for lithium-sulfur battery

0.5 M of lithium bis(fluorosulfonyl)imide (LiFSI), 5.0 wt% of lithium nitrate (LiNO₃, molar mass 69 g/mol), 1.5 wt% of diphenyl diselenide (PDSe, molar mass 312 g/mol) and 1.5 wt% of diphenyl ditelluride (DPDTe, 409 g/mol) were added to a mixture of dimethoxyethane (DME) and 2-methylfuran (2-MeF) (v/v=4:1) as a non-aqueous solvent, followed by stirring for 12 hours, to prepare an electrolyte solution.

### Preparation of electrode

A sulfur-carbon composite (S:C = 70:30 (weight ratio)) as a positive electrode active material and polyacrylic acid (PAA) as a binder were mixed at a weight ratio of 97:3 using distilled water as a solvent to prepare a positive electrode slurry.

The as-prepared positive electrode slurry composition was coated on two surfaces of a 12 µm-thick aluminum current collector, dried at 80°C and rolled using a roll press to manufacture a positive electrode. In this instance, the loading amount of the positive electrode active material was 3.45 mAh/cm².

A 30 µm-thick lithium metal was prepared as a negative electrode.

### Manufacture of lithium-sulfur battery

The as-prepared positive and negative electrodes were placed with a polyethylene separator having a thickness of 16 µm and a porosity of 68% interposed between them, and stacked to assemble a pouch cell. Subsequently, 1 g of the as-prepared electrolyte solution was injected with an electrolyte/S loading amount (E/S ratio) of 2.15 g/g, followed by sealing, to manufacture a pouch-type lithium-sulfur battery.

### Example 2

A lithium-sulfur battery was manufactured according to the same method as Example 1, except that 0.5 wt% of PDSe and 2.5 wt% of DPDTe were added.

### Comparative Example 1

A lithium-sulfur battery was manufactured according to the same method as Example 1, except that PDSe and DPDTe were not added.

### Comparative Example 2

A lithium-sulfur battery was manufactured according to the same method as Example 1, except that DPDTe was not added and 3 wt% of PDSe was added.

### Comparative Example 3

A lithium-sulfur battery was manufactured according to the same method as Example 1, except that PDSe was not added and 3 wt% of DPDTe was added.

### Comparative Example 4

A lithium-sulfur battery was manufactured according to the same method as Example 1, except that a mixture of dioxolane (DOL) and dimethoxyethane (DME) (v/v=1:1) was used as the non-aqueous solvent.

### Comparative Example 5

A lithium-sulfur battery was manufactured according to the same method as Example 1, except that a mixture of dioxolane (DOL) and dimethoxyethane (DME) (v/v=1:1) was used as the non-aqueous solvent, and 1.0 M of lithium bis(trifluoromethanesulfonyl)imide (LiTFSI) was used as the lithium salt.

### [Battery performance evaluation and results]

Battery performance was evaluated by the following method, and TABLE 1 below summarizes the results.

In the battery subjected to 0.1C charge/0.1C discharge (2.5V upper limit/1.8V lower limit in each of charge and discharge) cycling three times at the temperature of 30°C, initial discharge capacity was measured and specific capacity was evaluated, and nominal voltage was measured.

**[TABLE 1]**

| Classification | Discharge capacity @ 0.1C (mAh/gs) | Vn @ 0.1C (V) |
|---|---|---|
| Example 1 | 1,410 | 2.150 |
| Example 2 | 1,425 | 2.13 |
| Comparative Example 1 | 1,217 | 2.161 |
| Comparative Example 2 | 1,336 | 2.153 |
| Comparative Example 3 | 1,407 | 2.138 |
| Comparative Example 4 | 1,243 | 1.92 |
| Comparative Example 5 | 768 | - |

As can be seen from the results in TABLE 1, it was confirmed that the use of the aryl derivative including the first aryl derivative and the second aryl derivative in the electrolyte solution for the lithium-sulfur battery achieved high discharge capacity and nominal voltage. In particular, it was confirmed that compared to the first aryl derivative alone, the discharge capacity was increased, and the problem with the reduction in nominal voltage arising from the use of the second aryl derivative alone was solved.

Further, it was confirmed that when the second aryl derivative was included in a larger amount so that the ratio of the first aryl derivative and the second aryl derivative was higher than 1:1, the discharge capacity may be higher, but the nominal voltage was lower than 2.145 V, and it was confirmed that when the heterocyclic compound was not included as the non-aqueous solvent, the discharge capacity was significantly reduced.

## Claims

1. An electrolyte solution for a lithium-sulfur battery, comprising:
a non-aqueous solvent, a lithium salt, a nitrate, a first aryl derivative and a second aryl derivative,
wherein the non-aqueous solvent includes a heterocyclic compound including a single oxygen atom (O) or a single sulfur atom (S) in a ring structure; and a glycol ether,
wherein the first aryl derivative includes at least one of compounds represented by any one of the following Chemical Formulas 1 to 4,
wherein the second aryl derivative includes at least one of compounds represented by any one of the following Chemical Formulas 5 to 8:
[Chemical Formula 1] R¹-Se-Li
[Chemical Formula 2] R²-Se-Se-R³
[Chemical Formula 3] R⁴-Se-Sx-Li
[Chemical Formula 4] R⁵-Se-Sx-Se-R⁶
[Chemical Formula 5] R⁷-Te-Li
[Chemical Formula 6] R⁸-Te-Te-R⁹
[Chemical Formula 7] R¹⁰-Te-Sx-Li
[Chemical Formula 8] R¹¹-Te-Sx-Te-R¹²
wherein R¹~R¹² are each independently an C₆-C₂₀ aryl group, and
wherein x is a number of 1 to 8.

2. The electrolyte solution for the lithium-sulfur battery according to claim 1,
wherein the first aryl derivative includes diphenyl diselenide (PDSe).

3. The electrolyte solution for the lithium-sulfur battery according to claim 1,
wherein the second aryl derivative includes diphenyl ditelluride (DPDTe).

4. The electrolyte solution for the lithium-sulfur battery according to claim 1,
wherein a weight ratio of the first aryl derivative and the second aryl derivative ranges from 3:2 to 2:3.

5. The electrolyte solution for the lithium-sulfur battery according to claim 1,
wherein a weight ratio of the first aryl derivative and the second aryl derivative is 1:1.

6. The electrolyte solution for the lithium-sulfur battery according to claim 1,
wherein a sum of weights of the first aryl derivative and the second aryl derivative is equal to or less than a weight of the nitrate.

7. The electrolyte solution for the lithium-sulfur battery according to claim 1,
wherein a sum of weights of the first aryl derivative and the second aryl derivative is 3 wt% or more of a total weight of the electrolyte solution.

8. The electrolyte solution for the lithium-sulfur battery according to claim 1,
wherein a volume ratio of the heterocyclic compound and the glycol ether ranges from 1:3 to 1:10.

9. A lithium-sulfur battery comprising:
the electrolyte solution for the lithium-sulfur battery according to any one of claims 1 to 8;
a positive electrode including a positive electrode active material; and
a negative electrode including a negative electrode active material,
wherein the positive electrode active material includes an elemental sulfur, a sulfur compound or a mixture thereof.

10. The lithium-sulfur battery according to claim 9,
wherein a specific capacity is in a range of 1,400 mAh/gs or more at 0.1C discharge.
